# EUROPEAN PATENT APPLICATION

(11) **EP 4 545 539 A1**
(43) Date of publication of application: **30.04.2025**
(21) Application number: 23885988.8
(22) Date of filing: 06.09.2023
(51) Int. Cl.: C07F 7/00, C08F 4/64, C08F 4/659

(54) **TRANSITION METAL COMPOUND AND CATALYST COMPOSITION CONTAINING SAME**

(30) Priority: 31.10.2022 KR 20220142694; 31.10.2022 KR 20220142695
(71) Applicant: LG Chem, Ltd., Yeongdeungpo-gu Seoul 07336 (KR)
(72) Inventor: LEE, Yun Jin, Daejeon 34122 (KR); PARK, Geun Ho, Daejeon 34122 (KR); PARK, Cheol Woong, Daejeon 34122 (KR); HAN, Ki Won, Daejeon 34122 (KR); CHO, Seong Mi, Daejeon 34122 (KR); LEE, Jong Chul, Daejeon 34122 (KR)
(74) Representative: Hoffmann Eitle
(86) International application number: PCT/KR2023/013335
(87) International publication number: WO 2024/096291

(57) **Abstract**

The present invention relates to a transition metal compound having a novel structure and a catalyst composition comprising the same.

## Description

### TECHNICAL FIELD

### Cross-reference to Related Applications

This application claims the benefit of Korean Patent Application No. 2022-0142694, filed on October 31, 2022, and Korean Patent Application No. 2022-0142695, filed on October 31, 2022, in the Korean Intellectual Property Office, the contents of which are incorporated herein by reference.

### Technical Field

The present invention relates to a transition metal compound having a novel structure and a catalyst composition comprising the same.

### BACKGROUND ART

Generally, olefin polymers such as an ethylene copolymer are useful polymer materials as the material for hollow molded product, an extrusion molded product, a film, a sheet or the like, and have been prepared in the presence of a Ziegler-Natta catalyst system.

The Ziegler-Natta catalyst is a heterogeneous catalyst and is a catalyst used in a system in which the phase of a reactant and the phase of a catalyst are not the same, for example, a system of liquid reactant-solid catalyst or the like. Such a Ziegler-Natta catalyst is composed of two components and is generally composed of a halogen compound of a transition metal including titanium (Ti), vanadium (V), chromium (Cr), molybdenum (Mo) and zirconium (Zr), (for example, TiCl₄), alkyllithium, alkylaluminum or the like.

However, the Ziegler-Natta catalyst has the concentration of active species of a few % to tens of % with respect to a transition metal atom, and most transition metal atoms may not demonstrate their function and have defects of not overcoming the limitations as a heterogeneous catalyst.

Recently, as a next generation catalyst which may overcome the defects, metallocene compounds have received the attention. The metallocene compounds are homogeneous catalysts including a metal in group 4 and are known to show desirable polymerization activity in olefin polymerization.

Most metallocene catalysts used for polymerization include a metal element in group 4 such as titanium, zirconium, and hafnium (Hf) and a supporting ligand, as a precursor, and are composed of two aromatic five-member rings and two halogen compounds which are leaving groups. Among them, an aromatic cyclopentadienyl group is generally used as the supporting ligand which is coordinated with respect to a central metal.

Such a metallocene catalyst is used in a variety of applications including an olefin polymerization process, but the catalyst activity showed some limitations (particularly in a solution process at temperature conditions of 100°C or higher), and it is known that, for example, due to relatively rapid terminal termination reaction (or chain reaction) such as beta-hydride elimination reaction, an olefin polymer with a low molecular weight showing a molecular weight (Mn) of 20,000 or less at a temperature of 100°C or higher may be prepared. In addition, the active species of the metallocene catalyst is known to be deactivated at a temperature of 100°C or higher. Accordingly, in order to increase the applicability of the metallocene catalyst, methods for overcoming the above-mentioned limitations are necessary.

### [Prior Art Document]

### [Patent Document]

(Patent Document 1) US Registration Patent No. 5,064,802

### DETAILED DESCRIPTION OF THE INVENTION

### TECHNICAL PROBLEM

An object of the present invention is to provide a novel transition metal compound which is capable of preparing an olefin-based polymer having high heat resistance, and a catalyst composition comprising the same.

### TECHNICAL SOLUTION

To solve the above tasks, the present invention provides a transition metal compound, a catalyst composition and a method for preparing an olefin polymer.
(1) The present invention provides a transition metal compound represented by Formula 1. 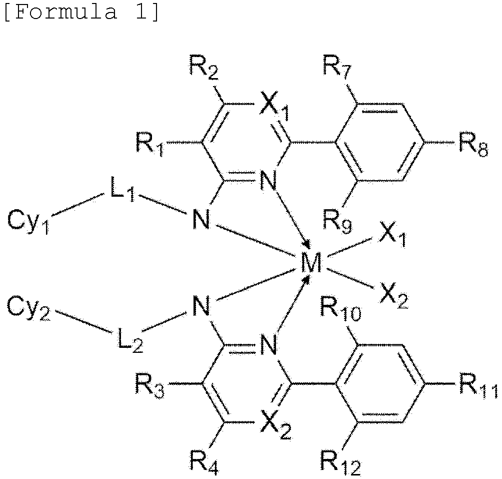 In Formula 1,
   M is Ti, Zr or Hf,
   X₁ and X₂ are each independently C-R₅, C-R₆ or N, where R₅ and R₆ are each independently hydrogen, an alkyl group of 1 to 20 carbon atoms or a cycloalkyl group of 5 to 20 carbon atoms,
   R₁ to R₄ are each independently hydrogen, an alkyl group of 1 to 20 carbon atoms or a cycloalkyl group of 5 to 20 carbon atoms,
   R₇ to R₁₂ are each independently an alkyl group of 1 to 20 carbon atoms,
   L₁ and L₂ are each independently a single bond or an alkylene group of 1 to 20 carbon atoms,
   Cy₁ and Cy₂ are each independently a cycloalkyl group of 5 to 20 carbon atoms, and
   X₁ and X₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.
(2) The present invention provides the transition metal compound according to (1), wherein M is Hf, X₁ and X₂ are each independently C-H or N, R₁ to R₄ are each independently hydrogen or an alkyl group of 1 to 10 carbon atoms, R₇ to R₁₂ are each independently an alkyl group of 1 to 10 carbon atoms, L₁ and L₂ are each independently an alkylene group of 1 to 6 carbon atoms, Cy₁ and Cy₂ are each independently a cycloalkyl group of 5 to 10 carbon atoms, and X₁ and X₂ are each independently an alkyl group of 1 to 10 carbon atoms, an aryl group of 6 to 20 carbon atoms or an arylalkyl group of 7 to 20 carbon atoms.
(3) The present invention provides the transition metal compound according to (1) or (2), wherein the transition metal compound represented by Formula 1 is a compound represented by Formula 1A or Formula 1B. 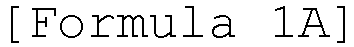 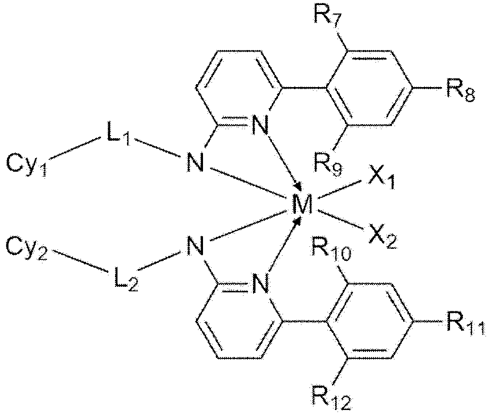 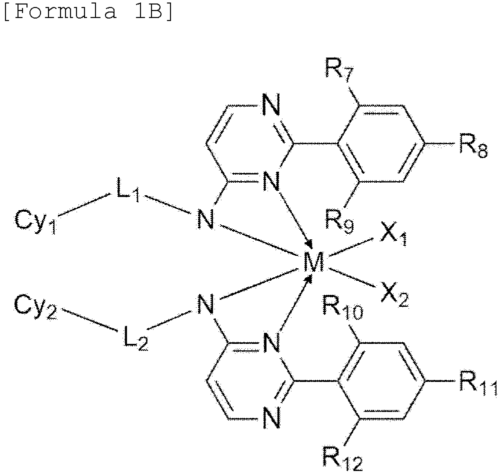 In Formula 1A and Formula 1B,
   M is Ti, Zr or Hf,
   R₇ to R₁₂ are each independently an alkyl group of 1 to 20 carbon atoms,
   L₁ and L₂ are each independently a single bond or an alkylene group of 1 to 20 carbon atoms,
   Cy₁ and Cy₂ are each independently a cycloalkyl group of 5 to 20 carbon atoms, and
   X₁ and X₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.
(4) The present invention provides the transition metal compound according to one among (1) to (3), wherein the transition metal compound represented by Formula 1 is one selected from the group consisting of Formula 1-1 to Formula 1-5. 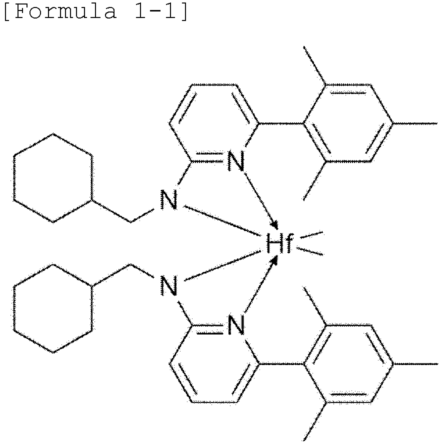 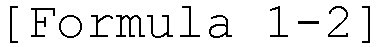 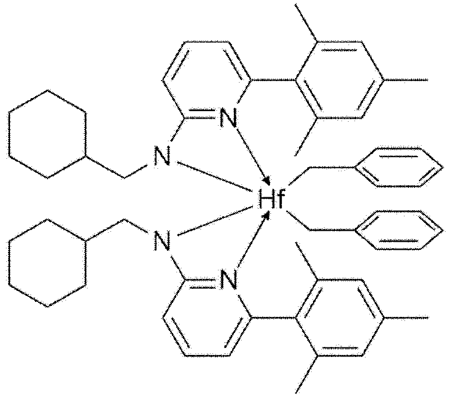 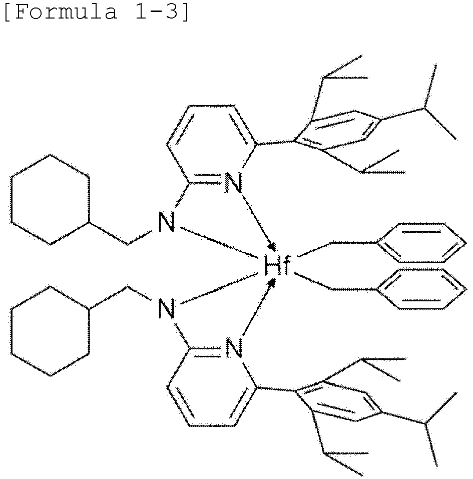 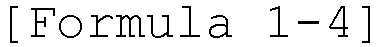 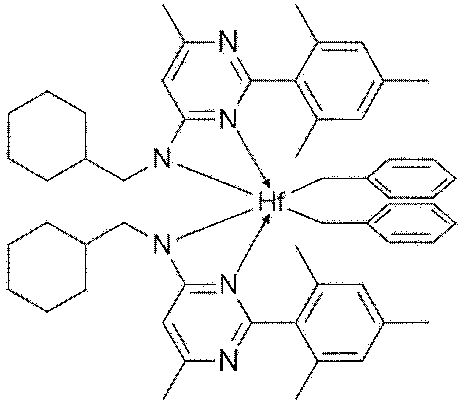 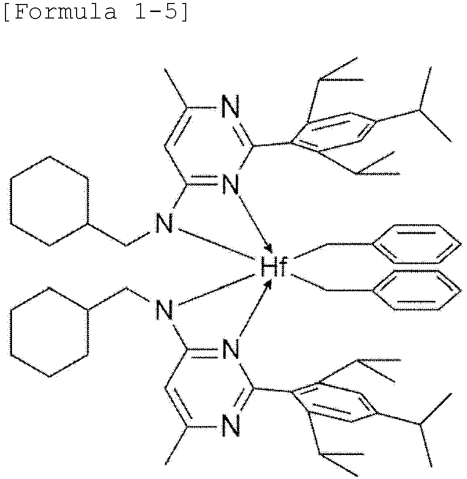
(5) The present invention provides a catalyst composition comprising the transition metal compound according to one of (1) to (4), and a cocatalyst.
(6) The present invention provides the catalyst composition according to (5), wherein the catalyst composition further comprises a transition metal compound represented by Formula 2.

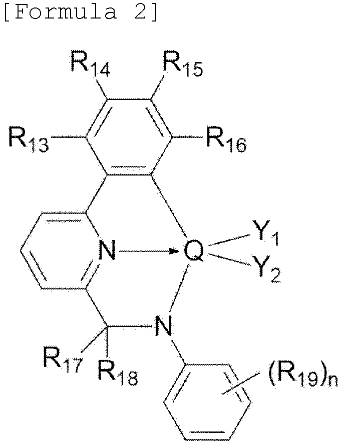

   In Formula 2,
   Q is Ti, Zr or Hf,
   R₁₃ to R₁₆ are each independently hydrogen or an alkyl group of 1 to 20 carbon atoms, where adjacent two or more may be connected with each other to form a ring,
   R₁₇ and R₁₈ are each independently hydrogen or a substituted or unsubstituted aryl group of 6 to 20 carbon atoms, where the substitution is substitution with an alkyl group of 1 to 6 carbon atoms,
   each R₁₉ is independently an alkyl group of 3 to 20 carbon atoms, a cycloalkyl group of 4 to 20 carbon atoms or an aryl group of 6 to 20 carbon atoms,
   n is 1 to 5, and
   Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.
(7) The present invention provides the catalyst composition according to (6), wherein the transition metal compound represented by Formula 2 is a compound represented by Formula 2A.

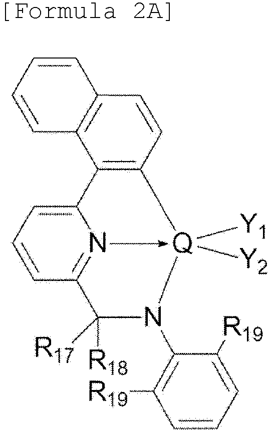

   In Formula 2A,
   Q is Ti, Zr or Hf,
   R₁₇ and R₁₈ are each independently hydrogen or a substituted or unsubstituted aryl group of 6 to 20 carbon atoms, where the substitution is substitution with an alkyl group of 1 to 6 carbon atoms,
   each R₁₉ is independently an alkyl group of 3 to 20 carbon atoms, a cycloalkyl group of 4 to 20 carbon atoms or an aryl group of 6 to 20 carbon atoms, and
   Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.
(8) The present invention provides the catalyst composition according to one among (5) to (7), wherein the cocatalyst comprises one or more selected from the group consisting of Formula 3 to Formula 5.

   [Formula 3] -[Al(Rₐ)-O]ₘ-

   [Formula 4] D(Rₐ)₃

   [Formula 5] [L-H]⁺[Z(A)₄]⁻ or [L]⁺[Z(A)₄]⁻

   In the above Formulas,
   each Rₐ is independently a halogen radical, a hydrocarbyl radical of 1 to 20 carbon atoms, or a halogensubstituted hydrocarbyl radical of 1 to 20 carbon atoms,
   m is an integer of 2 or more,
   D is aluminum or boron,
   L is a neutral or cationic Lewis acid,
   Z is an element in group 13,
   each A is independently aryl of 6 to 20 carbon atoms, in which one or more hydrogen atoms may be substituted with substituents, or alkyl of 1 to 20 carbon atoms, and
   the substituent of A is halogen, hydrocarbyl of 1 to 20 carbon atoms, alkoxy of 1 to 20 carbon atoms, or aryloxy of 6 to 20 carbon atoms.
(9) The present invention provides a method for preparing an olefin polymer, the method comprising a step of polymerizing an olefin monomer in the presence of the catalyst composition according to one among (5) to (8).

### EFFECTS OF THE INVENTION

An olefin-based polymer having high heat resistance may be prepared by using the transition metal compound according to the present invention as a catalyst.

### MODE FOR CARRYING OUT THE INVENTION

Hereinafter, the present invention will be described in more detail to assist the understanding of the present invention.

It will be understood that words or terms used in the present disclosure and claims shall not be interpreted as the meaning defined in commonly used dictionaries. It will be further understood that the words or terms should be interpreted as having a meaning that is consistent with their meaning in the technical idea of the invention, based on the principle that an inventor may properly define the meaning of the words or terms to best explain the invention.

In the present invention, "alkyl" means linear, cyclic or branched hydrocarbon residue group, unless otherwise referred to, and includes methyl, ethyl, n-propyl, isopropyl, n-butyl, isobutyl, t-butyl, n-pentyl, isopentyl and hexyl, without limitation.

In the present invention, "cycloalkyl" refers to a non-aromatic cyclic hydrocarbon radical composed of carbon atoms, unless otherwise referred to. Non-limiting examples of the "cycloalkyl" includes cyclopropyl, cyclobutyl, cyclopentyl, cyclohexyl and cycloheptyl.

In the present invention, unless otherwise referred to, "aryl" refers to an optionally substituted benzene ring, or a ring system formed by fusing one or more optional substituents. Examples of the optional substituent include substituted Cl-3 alkyl, substituted C2-3 alkenyl, substituted C2-3 alkynyl, heteroaryl, heterocyclic, aryl, alkoxy having optional one to three fluorine substituents, aryloxy, aralkoxy, acyl, aroyl, heteroaroyl, acyloxy, aroyloxy, heteroaroyloxy, sulfanyl, sulfinyl, sulfonyl, aminosulfonyl, sulfonylamino, carboxamide, aminocarbonyl, carboxyl, oxo, hydroxyl, mercapto, amino, nitro, cyano, halogen or urado. The ring or the ring system may be optionally fused with an aryl ring (for example, benzene ring), carbon ring or heterocyclic ring, having optional one or more substituents. Non-limiting examples of the "aryl" group include phenyl, naphthyl, tetrahydronaphthyl, biphenyl, indanyl, anthracyl, phenanthryl, or substituted derivatives thereof.

In the present invention, "alkylaryl" means an aryl group substituted with the alkyl group.

In the present invention, "arylalkyl" means an alkyl group substituted with the aryl group.

In the present invention, an "alkylene group" means a branched or non-branched divalent unsaturated hydrocarbon, and the alkylene group may be substituted or unsubstituted. The alkylene group may include a methylene group, an ethylene group, a propylene group, an isopropylene group, a butylene group, an isobutylene group, a tert-butylene group, a pentylene group, a 3-pentylene group or the like.

In the present invention, unless otherwise referred to, "hydrocarbyl" means a monovalent hydrocarbon group of 1 to 20 carbon atoms, composed of only carbon and hydrogen regardless of its structure, such as alkyl, aryl, alkenyl, alkynyl, cycloalkyl, alkylaryl and arylalkyl.

The transition metal compound of the present invention is characterized in being represented by Formula 1.

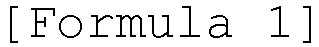

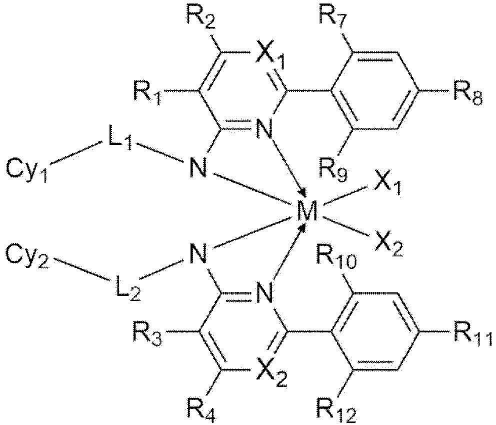

In Formula 1,
M is Ti, Zr or Hf,
X₁ and X₂ are each independently C-R₅, C-R₆ or N, where R₅ and R₆ are each independently hydrogen, an alkyl group of 1 to 20 carbon atoms or a cycloalkyl group of 5 to 20 carbon atoms,
R₁ to R₄ are each independently hydrogen, an alkyl group of 1 to 20 carbon atoms or a cycloalkyl group of 5 to 20 carbon atoms,
R₇ to R₁₂ are each independently an alkyl group of 1 to 20 carbon atoms,
L₁ and L₂ are each independently a single bond or an alkylene group of 1 to 20 carbon atoms,
Cy₁ and Cy₂ are each independently a cycloalkyl group of 5 to 20 carbon atoms, and
X₁ and X₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

The transition metal compound of the present invention is characterized in including cyclo functional groups at positions Cy₁ and Cy₂ in Formula 1 and having a bulky structure. In this case, the solubility of the transition metal compound increases according to the increase of carbon number, and thus, the preparation yield of the transition metal compound may increase, and activity as a catalyst may become excellent. In addition, if the transition metal compound is used as a catalyst in the copolymerization reaction of ethylene and alpha-olefin, the approach of the alpha-olefin may be minimized due to the bulky structure of the catalyst, and an ethylene/alpha-olefin copolymer having a high melting temperature (Tm) may be prepared.

As described above, the transition metal compound of the present invention may be usefully used as the catalyst for preparing an olefin polymer, and this is intrinsic characteristic achieved by the novel structure of the compound newly developed in the present invention.

Particularly, in Formula 1, M may be Hf.

Particularly, in Formula 1, X₁ and X₂ may be each independently C-H or N.

Particularly, in Formula 1, R₁ to R₄ may be each independently hydrogen or an alkyl group of 1 to 10 carbon atoms, an alkyl group of 1 to 6 carbon atoms, an alkyl group of 1 to 3 carbon atoms, particularly, hydrogen.

Particularly, in Formula 1, R₇ to R₁₂ may be each independently an alkyl group of 1 to 10 carbon atoms, an alkyl group of 1 to 6 carbon atoms, an alkyl group of 1 to 3 carbon atoms, particularly, methyl, ethyl, or propyl.

Particularly, in Formula 1, L₁ and L₂ may be each independently an alkylene group of 1 to 6 carbon atoms, an alkylene group of 1 to 3 carbon atoms, particularly, a methylene group.

Particularly, in Formula 1, Cy₁ and Cy₂ may be each independently a cycloalkyl group of 5 to 10 carbon atoms, a cycloalkyl group of 5 to 8 carbon atoms, a cycloalkyl group of 6 to 8 carbon atoms, particularly, a cyclohexyl group.

Particularly, in Formula 1, X₁ and X₂ may be each independently an alkyl group of 1 to 10 carbon atoms, an alkyl group of 1 to 6 carbon atoms, an alkyl group of 1 to 3 carbon atoms, an aryl group of 6 to 20 carbon atoms, an aryl group of 6 to 10 carbon atoms, an arylalkyl group of 7 to 20 carbon atoms, an arylalkyl group of 11 to 20 carbon atoms, particularly, a methyl group, a phenyl group, or a phenylmethyl group (benzyl group).

Particularly, the transition metal compound represented by Formula 1 may be a compound represented by Formula 1A or Formula 1B.

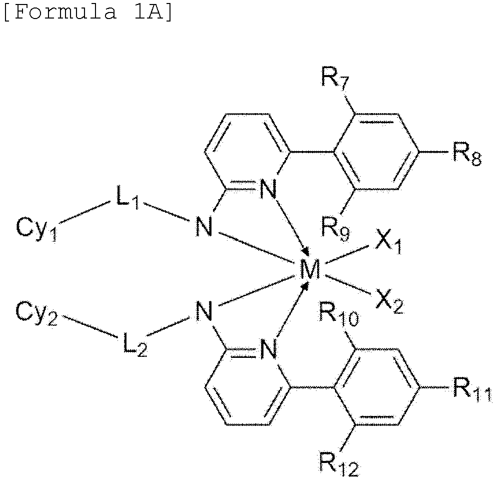

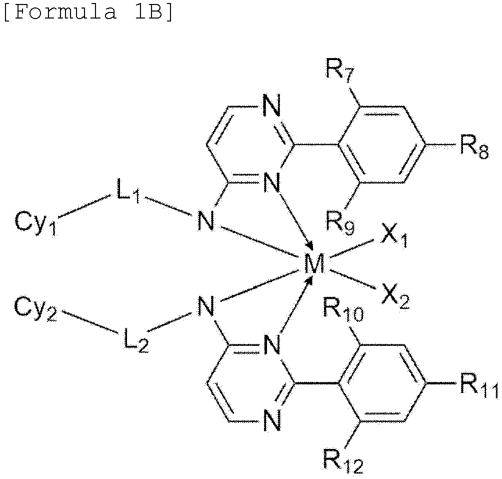

In Formula 1A and Formula 1B,
M, R₇ to R₁₂, L₁ and L₂, Cy₁ and Cy₂, X₁ and X₂ are the same as defined above.

The transition metal compound represented by Formula 1 may particularly be one selected from the group consisting of Formula 1-1 to Formula 1-5, but all transition metal compounds corresponding to Formula 1 are included in the present invention, without limitation.

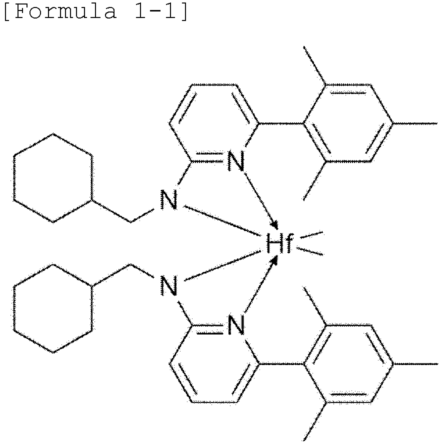

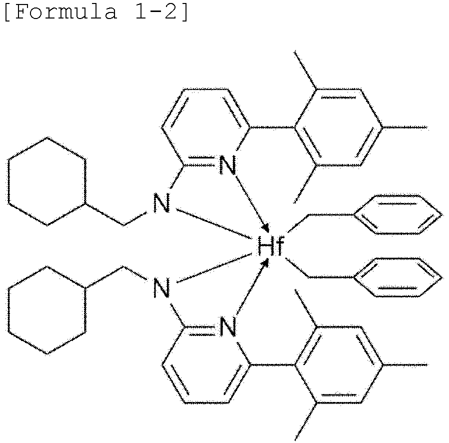

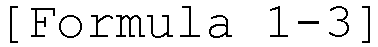

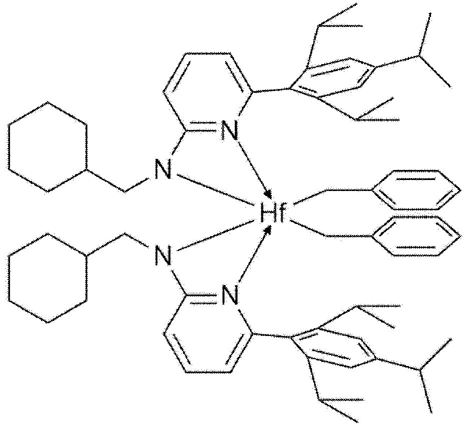

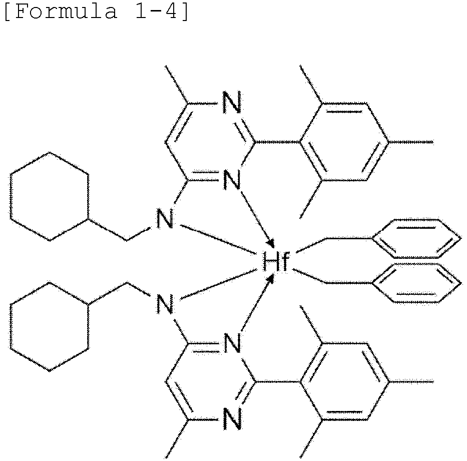

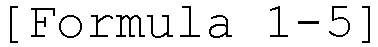

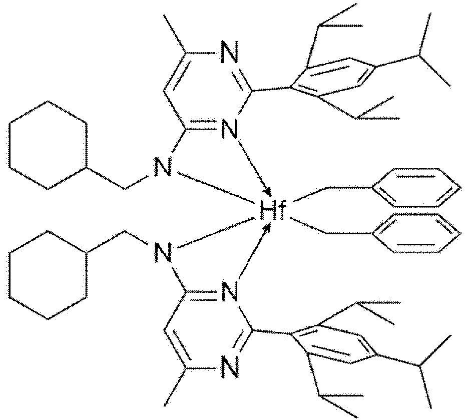

The catalyst composition of the present invention is characterized in including the transition metal compound represented by Formula 1 and a cocatalyst.

In the present invention, a "composition" includes a mixture of materials including the composition as well as a reaction product and a decomposition product obtained from the materials of the composition.

In addition, the catalyst composition of the present invention may further include a cocatalyst.

The cocatalyst may use a known one in this technical field, for example, one or more selected from the group consisting of Formula 4 to Formula 6 may be used as the cocatalyst.

[Formula 4] -[Al(Rₐ)-O]ₘ-

[Formula 5] D(Rₐ)₃

[Formula 6] [L-H]⁺[Z(A)₄]⁻ or [L]⁺[Z(A)₄]⁻

In the above Formulas,
each Rₐ is independently a halogen radical, a hydrocarbyl radical of 1 to 20 carbon atoms, or a halogensubstituted hydrocarbyl radical of 1 to 20 carbon atoms,
m is an integer of 2 or more,
D is aluminum or boron,
L is a neutral or cationic Lewis acid,
Z is an element in group 13,
each A is independently aryl of 6 to 20 carbon atoms, wherein one or more hydrogen atoms may be substituted with substituents, or alkyl of 1 to 20 carbon atoms, and
the substituent of A is a halogen group, a hydrocarbyl group of 1 to 20 carbon atoms, an alkoxy group of 1 to 20 carbon atoms, or an aryloxy group of 6 to 20 carbon atoms.

The compound represented by Formula 4 is not specifically limited as long as it is alkylaluminoxane. Preferable examples may include methylaluminoxane, ethylaluminoxane, isobutylaluminoxane, butylaluminoxane, etc., particularly preferably, methylaluminoxane.

The compound represented by Formula 5 is not specifically limited, and preferable examples thereof may include trimethylaluminum, triethylaluminum, triisobutylaluminum, tripropylaluminum, tributylaluminum, dimethylchloroaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, etc., and particularly preferably, be selected from trimethylaluminum, triethylaluminum, and triisobutylaluminum.

Examples of the compound represented by Formula 6, if Z is boron, may include, for example, dioctadecylmethylammonium tetrakis(pentafluorophenyl)borate [(C₁₈H₃₇)₂N(H)Me][B(C₆F₅)₄]⁻, dioctadecylmethylammonium, tetrakis(phenyl)borate, dioctadecylmethylammonium tetrakis[3,5-bis(trifluoromethyl)phenyl]borate, triethylammonium tetraphenylborate, tributylammonium tetraphenylborate, trimethylammonium tetraphenylborate, tripropylammonium tetraphenylborate, trimethylammonium tetra(p-tolyl)borate, trimethylammonium tetra(o,p-dimethylphenyl) borate, tributylammonium tetra(p-trifluoromethylphenyl)borate, trimethylammonium tetra(p-trifluoromethylphenyl)borate, tributylammonium tetrapentafluorophenylborate, N,N-diethylanilidium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, tripropylammonium tetra(p-tolyl)borate, triethylammonium tetra(o,p-dimethylphenyl)borate, trimethylammonium tetra(o,p-dimethylphenyl) borate, triphenylcarbonium tetra(p-trifluoromethylphenyl)borate, triphenylcarbonium tetrapentafluorophenylborate, or combinations thereof, if Z is aluminum, for example, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra (o,p-dimethylphenyl) aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, triethylammonium tetraphenylaluminum, tributylammonium tetraphenylaluminum, or combinations thereof, without limitation.

Particularly, the cocatalyst used in the present invention may be the compound represented by Formula 6, particularly, dioctadecylmethylammonium tetrakis(pentafluorophenyl)borate.

In addition, the transition metal compound represented by Formula 1 and the cocatalyst may be used in a supported type by a support. Silica or alumina may be used as the support, without limitation.

In the present invention, the catalyst composition may further include a transition metal compound represented by Formula 2.

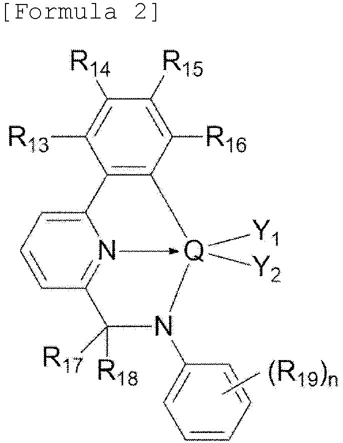

In Formula 2,
Q is Ti, Zr or Hf,
R₁₃ to R₁₆ are each independently hydrogen or an alkyl group of 1 to 20 carbon atoms, where adjacent two or more may be connected with each other to form a ring,
R₁₇ and R₁₈ are each independently hydrogen or a substituted or unsubstituted aryl group of 6 to 20 carbon atoms, where the substitution is substitution with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms,
n is 1 to 5, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

In the present invention, if the transition metal compound represented by Formula 1 and the transition metal compound represented by Formula 2 are used together, a catalyst having excellent elasticity and a catalyst having excellent heat resistance are mixed and used, and thus, a polymer showing excellent levels of elasticity and heat resistance at the same time, may be prepared.

Particularly, in Formula 2, Q may be Hf.

Particularly, in Formula 2, R₁₃ to R₁₆ may be each independently hydrogen or an alkyl group of 1 to 20 carbon atoms, where adjacent two or more may be connected with each other to form a ring, or R₁₃ and R₁₄ may be each independently an alkyl group of 1 to 20 carbon atoms and connected with each other to form an aromatic ring of 5 to 20 carbon atoms, and R₁₅ and R₁₆ may be hydrogen.

Particularly, in Formula 2, R₁₇ and R₁₈ may be each independently hydrogen or a substituted or unsubstituted aryl group of 6 to 20 carbon atoms, where the substitution may be substitution with an alkyl group of 1 to 6 carbon atoms.

Particularly, in Formula 2, each R₁₉ may be independently an alkyl group of 3 to 20 carbon atoms, a cycloalkyl group of 4 to 20 carbon atoms or an aryl group of 6 to 20 carbon atoms, particularly, an alkyl group of 3 to 6 carbon atoms.

Particularly, in Formula 2, n may be 1 to 5, 1 to 3, particularly, 2.

Particularly, in Formula 2, Y₁ and Y₂ may be each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms, particularly, an alkyl group of 1 to 20 carbon atoms.

More particularly, the transition metal compound represented by Formula 2 may be a compound represented by Formula 2A.

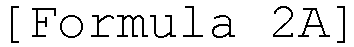

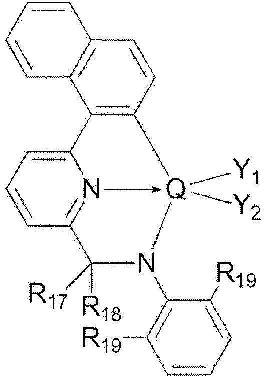

In Formula 2A,
Q is Ti, Zr or Hf,
R₁₇ and R₁₈ are each independently hydrogen or a substituted or unsubstituted aryl group of 6 to 20 carbon atoms, where the substitution is substitution with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

In Formula 2A,
Q, R₁₇ to R₁₉, Y₁ and Y₂ are the same as defined above.

The transition metal compound represented by Formula 2 may particularly be a compound below, but all transition metal compounds corresponding to Formula 2 may be included in the present invention, without limitation.

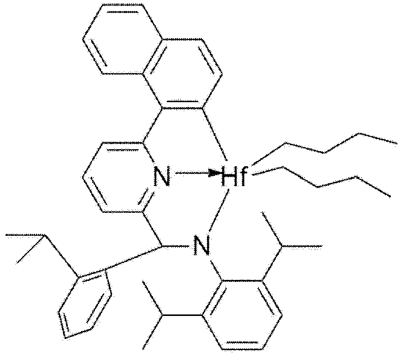

In addition, the transition metal compound represented by Formula 1 and the transition metal compound represented by Formula 2 in the catalyst composition may be 1:1 to 1:10, particularly, 1:1 to 1:6, 1:1 to 1:4, or 1:2.

The method for preparing an olefin polymer of the present invention is characterized in including a step of polymerizing an olefin monomer in the presence of the catalyst composition.

In the present invention, the "polymer" refers to a polymer compound prepared by polymerizing monomers of the same or different types. Like this, a general term of polymer includes the term of homopolymer used for referring to a polymer prepared from only one type of a monomer and the term of interpolymer specified as follows.

In the present invention, the term "interpolymer" refers to a polymer prepared by polymerizing at least two different types of monomers. Like this, a general term of interpolymer refers to a polymer prepared from two different types of monomers, and includes a commonly used copolymer and a polymer prepared from two or more different types of monomers.

In the present invention, the olefin monomer may be one or more selected from the group consisting of ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene and 1-eicosene, without limitation.

Particularly, the olefin polymer of the present invention may be an olefin homopolymer, or an olefin-alpha-olefin copolymer according to the type of the olefin monomer, and preferably, may be an ethylene/alpha-olefin copolymer. In this case, the amount of the alpha-olefin monomer, which is a comonomer, may be suitably selected according to the use, purpose, etc., of the olefin polymer by a person skilled in the art, and may be about 1 to 99 mol%.

The catalyst composition may be injected after being dissolved or diluted in an aliphatic hydrocarbon solvent of 5 to 12 carbon atoms such as pentane, hexane, heptane, nonane, decane, isomers thereof, an aromatic hydrocarbon solvent such as toluene and benzene, or a hydrocarbon solvent substituted with a chlorine atom such as dichloromethane and chlorobenzene, which are suitable for an olefin polymerization process. The solvent used herein may preferably be used after removing a small amount of water or air, which functions as a catalyst poison, by treating with a small amount of alkylaluminum, and may be treated by further using a cocatalyst.

The most preferable preparation process using the catalyst composition is a solution process, and if the composition is used together with an inorganic support such as silica, it may also be applied to a slurry process or a gas phase process.

The polymerization may be performed by homopolymerizing one type of olefin monomer or copolymerizing two or more olefin monomers by using one of a continuous slurry polymerization reactor, a loop slurry reactor, a gas phase reactor, or a solution reactor.

In addition, to remove moisture in the reactor during performing polymerization reaction, an organoaluminum compound may be further injected, and the polymerization reaction may be performed in the presence thereof. Particular examples of such organoaluminum compound may include trialkylaluminum, dialkylaluminum halide, alkylaluminum dihalide, aluminum dialkyl hydride or alkyl aluminum sesquihalide, and more particular examples thereof may include Al(C₂H₅)₃, Al(C₂H₅)₂H, Al(C₃H₇)₃, Al(C₃H₇)₂H, Al(i-C₄H₉)₂H, Al(C₈H₁₇)₃, Al(C₁₂H₂₅)₃, Al(C₂H₅)(C₁₂H₂₅)₂, Al(i-C₄H₉)(C₁₂H₂₅)₂, Al(i-C₄H₉)₂H, Al(i-C₄H₉)₃, (C₂H₅)₂AlCl, (i-C₃H₉)₂AlCl or (C₂H₅)₃Al₂Cl₃. Such an organoaluminum compound may be continuously injected to the reactor, or may be injected in a ratio of about 0.1 to 10 mol per 1 kg of a reaction medium which is injected to the reactor for suitable removal of moisture.

According to an embodiment of the present invention, the polymerization of the olefin polymer may be performed under conditions of a temperature of about 80 to 200°C, particularly, a temperature of about 90 to 200°C, or a temperature of about 130 to 200°C, and a pressure of about 20 to 100 bar, particularly, a pressure of about 20 to 50 bar, or a pressure of about 20 to 40 bar, for about 8 minutes to 2 hours.

### Examples

Hereinafter, the present invention will be explained in more detail referring to the Examples. However, the Examples are for illustrating the present invention, and the scope of the present invention is not limited thereto.

### <Preparation of Transition Metal Compound>

### Preparation Example 1

### (1) Preparation of Ligand Compound (N-(cyclohexylmethyl)-6-mesithylpyridine-2-amine)

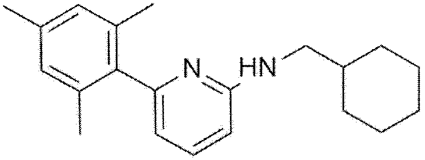

To a two neck bottle, 6-bromo-N-(cyclohexylmethyl)pyridine-2-amine (1 g, 3.71 mmol), aqueous K₂CO₃ (11 mL), H₂O (10 mL), and 1,4-dioxane (40 mL) were added and heated at 100°C. Pd(PPh₃)₄ (51 mg, 0.044 mmol) and 2,4,6-trimethylphenylboronic acid (730.2 mg, 4.45 mmol) were additionally added thereto, followed by reacting at 100°C overnight. The reaction product was dried in vacuum and worked-up with EA and water. An organic layer was separated, dried over MgSO₄ and concentrated, and the resultant was separated by column using hexane:EA = 20:1 to produce a white solid product (900 mg, yield 78.64%).

¹H-NMR (in CDCl₃ 500 MHz): 7.48 (t, 2H), 6.90 (s, 2H), 6.47 (d, 1H), 6.30 (d, 1H), 4.67 (t, 1H), 3.08 (t, 2H), 2.30 (s, 3H), 2.08 (s, 6H), 1.83-1.66 (m, 5H), 1.32-1.21 (m, 4H), 1.04-0.84 (m, 2H).

### (2) Preparation of Transition Metal Compound

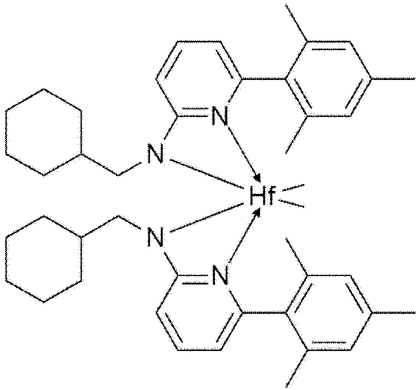

A catalyst was prepared in a glove box. 50 mg (0.6125 mmol) of the ligand compound of N-(cyclohexylmethyl)-6-mesithylpyridine-2-amine prepared above was weighed in a vial and dissolved by adding 1.6 mL of toluene. In another vial, HfCl₄ was weighed and dissolved using toluene. Two vials were cooled for 5 minutes, and 0.122 mL of MMB (3 M solution in toluene) was added to HfCl₄ dropwisely, followed by reacting at RT for 2 minutes.

The reaction solution was cooled again in a refrigerator for 5 minutes, and the ligand compound solution was added thereto dropwisely, followed by reacting at RT overnight. After drying toluene in vacuum, the resultant was extracted with hexane to produce a yellow solid product (49 mg, yield 73.5%).

¹H-NMR (in CDCl₃ 500 MHz): 7.38 (t, 2H), 6.82 (s, 4H), 6.09 (d, 2H), 5.94 (d, 2H), 2.30 (s, 12H), 2.08 (s, 6H), 1.92-1.69 (m, 22H), 1.38 (m, 2H), 1.28 (m, 2H).

### Preparation Example 2

### (1) Preparation of Ligand Compound

The N-(cyclohexylmethyl)-6-mesithylpyridine-2-amine prepared in Preparation Example 1 was used.

### (2) Preparation of Transition Metal Compound

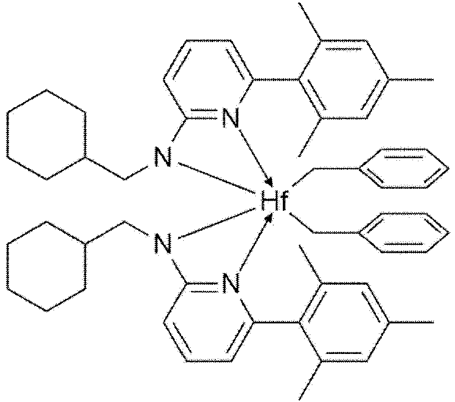

In two vials, the N-(cyclohexylmethyl)-6-mesithylpyridine-2-amine (50 mg, 0.1625 mmol) prepared in Preparation Example 1, and Hf(Bn)₄ (44.12 mg, 0.081 mmol) were weighed, and 1.6 mL of toluene was injected thereto each. The two vials were cooled in a refrigerator for 5 minutes. Two reactants were mixed and reacted at RT overnight and dried in vacuum to produce a yellow solid product (50 mg, yield 63.3%).

¹H-NMR (in CDCl₃ 500 MHz): 7.48 (t, 2H), 7.02 (t, 4H), 6.85 (s, 2H), 6.79 (s, 2H), 6.89-6.67 (m, 6H), 6.19 (d, 2H), 6.02 (d, 2H), 2.28 (s, 6H), 2.14 (s, 6H), 2.08-2.05 (m, 2H), 1.75 (d, 2H), 1.61 (s, 6H), 1.56 (m, 4H), 1.45-1.39 (m, 6H), 1.16 (d, 2H), 0.58 (q, 2H), 0.49 (q, 2H).

### Preparation Example 3

### (1) Preparation of Ligand Compound (N-(cyclohexylmethyl)-6-(2,4,6-triisopropylphenyl)pyridine-2-amine)

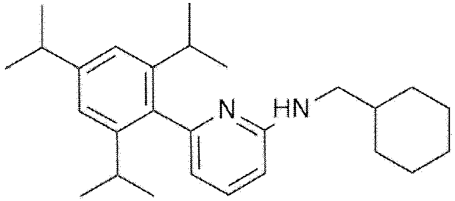

To a two neck bottle, 6-bromo-N-(cyclohexylmethyl)pyridine-2-amine (1 g, 3.71 mmol), aqueous K₂CO₃ (11 mL), H₂O (10 mL), and 1,4-dioxane (40 mL) were added and heated at 100°C. Pd(PPh₃)₄ (51 mg, 0.044 mmol) and 2,4,6-triisopropylphenylboronic acid (1.105 mg, 4.45 mmol) were additionally added thereto, followed by reacting at 100°C overnight. The reaction product was dried in vacuum and worked-up with EA and water. An organic layer was separated, dried over MgSO₄ and concentrated, and the resultant was separated by column using hexane:EA = 50:1 to produce a lemon solid product (650 mg, yield 44.62%).

¹H-NMR (in CDCl₃ 500 MHz): 7.46 (t, 1H), 6.54 (d, 1H), 6.31 (d, 1H), 4.64 (s, 1H), 3.08 (t, 2H), 2.91 (m, 1H), 2.66 (m, 2H), 1.80 (d, 2H), 1.73 (d, 2H), 1.67 (d, 1H), 1.60 (m, 3H), 1.27 (d, 6H), 1.20 (s, 1H), 1.15 (d, 6H), 1.10(d, 6H), 0.99 (q, 2H).

### (2) Preparation of Transition Metal Compound

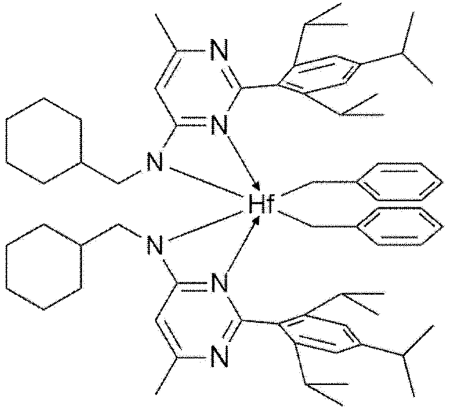

In two vials, the N-(cyclohexylmethyl)-6-(2,4,6-triisopropylphenyl)pyridine-2-amine prepared above (100 mg, 0.255 mmol), and Hf(Bn)₄ (69.13 mg, 0.127 mmol) were weighed, and 2.5 mL of toluene was injected thereto each. The two vials were cooled in a refrigerator for 5 minutes. Two reactants were mixed and reacted at RT overnight and dried in vacuum to produce a yellow solid product (30 mg, yield 10.3%).

¹H-NMR (in CDCl₃ 500 MHz): 7.43 (t, 2H), 7.01 (m, 6H), 6.66 (t, 2H), 6.59 (d, 4H), 6.31 (d, 2H), 6.05 (d, 2H), 3.49 (m, 2H), 2.87 (m, 4H), 2.54 (m, 2H), 2.13-2.02 (m, 4H), 1.85 (d, 2H), 1.73 (s, 3H), 1.62-1.61 (m, 4H), 1.21 (d, 6H), 1.13 (d, 6H), 1.08 (d, 12H), 0.97 (d, 6H), 0.93 (d, 6H), 0.51 (q, 2H), 0.41 (q, 2H).

### Preparation Example 4

### (1) Preparation of Ligand Compound (N-(cyclohexylmethyl)-2-mesithyl-6-methylpyrimidine-4-amine)

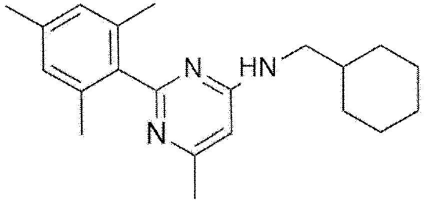

To a two neck bottle, 2-chloro-N-(cyclohexylmethyl)-6-methylpyrimidin-4-amine (500 mg, 2.22 mmol), aqueous K₂CO₃ (5 mL), H₂O (5 mL) and 1,4-dioxane (20 mL) were added and heated at 100°C. Pd(PPh₃)₄ (128.3 mg, 0.111 mmol) and 2,4,6-trimethylphenylboronic acid (437 mg, 2.664 mmol) were additionally added thereto, followed by reacting at 100°C overnight. The reaction product was dried in vacuum and worked-up with EA and water. An organic layer was separated, dried over MgSO₄ and concentrated, and the resultant was separated by column using hexane:EA = 10:1 to produce a white solid product (622 mg, yield 86.6%).

¹H-NMR (in CDCl₃ 500 MHz): 6.90 (s, 2H), 6.31 (s, 1H), 5.09 (t, 1H), 3,30 (t, 2H), 2.36 (s, 3H), 2.30 (s, 3H), 2.09 (s, 6H), 1.78 (d, 2H), 1.72 (d, 2H), 1.57-1.50 (m, 1H), 1.27-1.14 (m, 4H), 0.98 (q, 2H).

### (2) Preparation of Transition Metal Compound

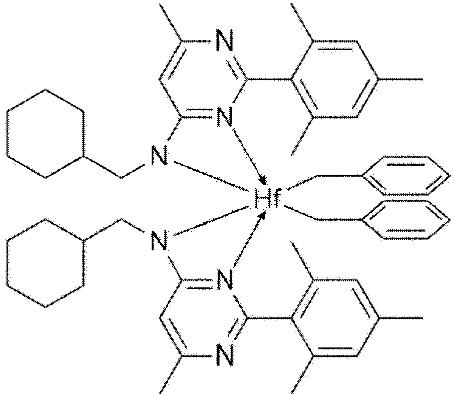

A catalyst was prepared in a glove box. 50 mg (0.155 mmol) of the ligand compound of N-(cyclohexylmethyl)-2-mesityl-6-methylpyrimidine-4-amine prepared above was weighed in a vial and dissolved by adding 1.5 mL of toluene. In another vial, HfCl₄ was weighed and dissolved in 1.5 mL of toluene. The reaction solutions in the two vials were mixed and reacted at RT overnight. After drying in vacuum, a yellow solid was obtained (50 mg, yield 64.2%).

¹H-NMR (in CDCl₃ 500 MHz): 7.06 (t, 2H), 6.92 (d, 2H), 6.91 (s, 2H), 6.71 (t, 1H), 6.04 (s, 1H), 2.32 (s, 3H), 2.16 (s, 6H), 1.94 (s, 3H), 1.59 (d, 4H), 1.52-1.46 (m, 1H), 1.31-1.27 (m, 4H), 1.10-1.07 (m, 2H).

### Preparation Example 5

### (1) Preparation of Ligand Compound (N-(cyclohexylmethyl)-6-methyl-2-(2,4,6-triisopropylphenyl)pyrimidine-4-amine)

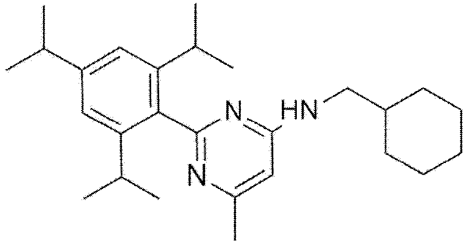

To a two neck bottle, 2-chloro-N-(cyclohexylmethyl)-6-methylpyrimidin-4-amine (400 mg, 2.22 mmol), aqueous K₂CO₃ (4 mL), H₂O (4 mL) and 1,4-dioxane (16 mL) were added and heated at 100°C. Pd(PPh₃)₄ (128.3 mg, 0.111 mmol) and 2,4,6-trimethylphenylboronic acid (661.12 mg, 2.664 mmol) were additionally added thereto, followed by reacting at 100°C overnight. The reaction product was dried in vacuum and worked-up with EA and water. An organic layer was separated, dried over MgSO₄ and concentrated, and the resultant was separated by column using hexane:EA = 20:1 to produce a white solid product (400 mg, yield 44.2%).

¹H-NMR (in CDCl₃ 500 MHz): 7.04 (s, 2H), 6.38 (s, 1H), 5.07 (t, 1H), 3.29 (t, 2H), 2.94-2.89 (m, 1H), 2.70-2.36 (m, 2H), 1.78 (d, 2H), 1.72 (d, 2H), 1.66 (d, 1H), 1.57-1.50 (m, 1H), 1.28 (s, 3H), 1.27 (d, 6H), 1.21-1.19 (m, 2H), 1.15 (d, 6H), 1.13 (d, 6H), 1.01-0.96 (m, 2H).

### (2) Preparation of Transition Metal Compound

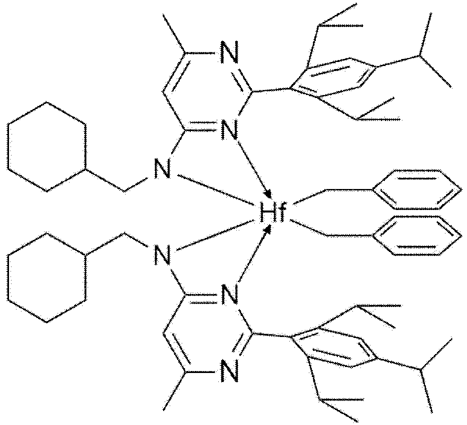

A catalyst was prepared in a glove box. 50 mg (0.1273 mmol) of the ligand compound of N-(cyclohexylmethyl)-6-methyl-2-(2,4,6-triisopropylphenyl)pyrimidine-4-amine prepared above was weighed in a vial and dissolved by adding 1.3 mL of toluene. In another vial, HfCl₄ was weighed and dissolved in 1.3 mL of toluene. The reaction solutions in the two vials were mixed and reacted at RT overnight. After drying in vacuum, a yellow solid was obtained (60 mg, yield 81.1%).

¹H-NMR (in CDCl₃ 500 MHz): 7.08 (t, 2H), 7.06 (s, 2H), 6.95 (s, 2H), 6.73 (t, 1H), 6.08 (s, 1H), 3.32 (d, 2H), 2.96-2.89 (m, 1H), 2.77-2.72 (m, 2H), 1.92 (s, 3H), 1.67-1.59 (m, 6H), 1.55-1.48 (m, 1H), 1.30 (d, 6H), 1.22 (d, 6H), 1.17 (d, 6H), 1.10-1.07 (m, 3H).

### Reference Example

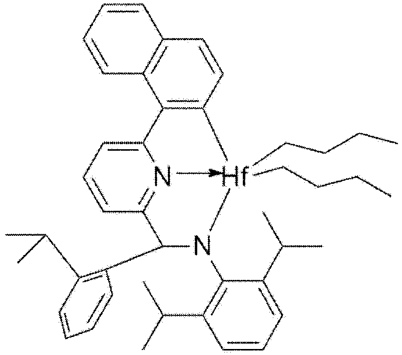

According to a method disclosed in a document [Organometallics 2011, 30, 12, 3318-3329], a compound of Reference Example was prepared.

### Comparative Preparation Example 1

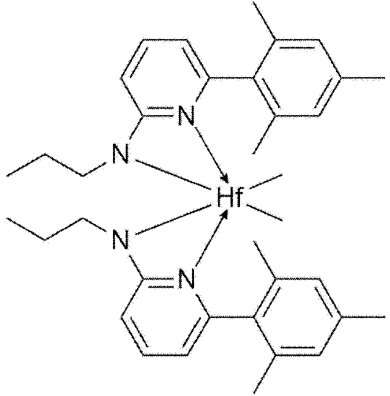

According to a method disclosed in a document of US 10968289 B2, a compound of Comparative Preparation Example 1 was prepared.

### Comparative Preparation Example 2

### (1) Preparation of Ligand Compound (N-isobutyl-2-mesityl-6-methylpyrimidine-4-amine)

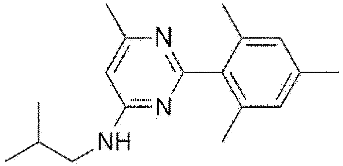

To a two neck bottle, 2-chloro-N-isobutyl-6-methylpyrimidin-4-amine (1 g, 5 mmol), K₂CO₃ (2.08 g, 15 mmol), H₂O (17 mL), toluene (17 mL), and ethanol (8 mL) were added and heated at 100°C. Pd(PPh₃)₄ (0.116 g, 0.1 mmol) and 2,4,6-trimethylphenylboronic acid (0.86 g, 5.3 mmol) were additionally added thereto, followed by reacting at 100°C overnight. The reaction product was dried in vacuum and worked-up with EA and water. An organic layer was separated, dried over MgSO₄ and concentrated, and the resultant was recrystallized in MeOH to produce a white solid product (1.4 mg, yield 99%).

¹H-NMR (in CDCl₃ 500 MHz): 6.90 (s, 2H), 6.34 (s, 1H), 5.50 (broad, 1H), 3.30 (t, 2H), 2.39 (s, 3H), 2.30 (s, 3H), 1.87 (m, 1H), 0.97 (d, 6H).

### (2) Preparation of Transition Metal Compound

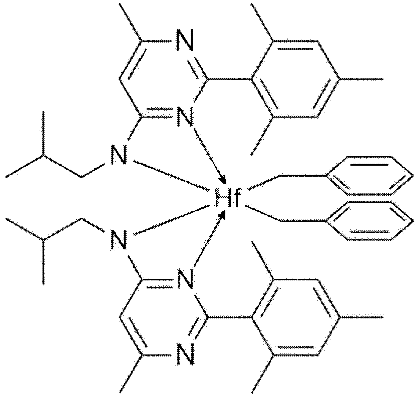

A catalyst was prepared in a glove box. 200 mg (0.71 mmol) of the ligand compound prepared above was weighed in a vial and dissolved by adding 7 mL of toluene. In another vial, HfCl₄ (113 mg, 0.35 mmol) was weighed and dissolved. After cooling to -30°C, MMB (3 M solution in toluene) (0.53 mL, 1.59 mmol) was added thereto dropwisely, followed by reacting at RT overnight. After drying toluene in vacuum, the resultant was extracted with hexane to obtain a yellow solid product (120 mg, yield 44%).

¹H-NMR (in Benzene 500 MHz): 6.67 (s, 4H), 5.26 (s, 2H), 3.04 (t, 4H), 2.07 (s, 6H), 2.04 (s, 6H), 1.87 (s, 12H), 1.70 (s, 6H), 1.41 (m, 2H), 0.81 (d, 12H).

### Comparative Preparation Example 3

### (1) Preparation of Ligand Compound (6-(dibenzo[b,d]furan-1-yl)-N-propylpyridin-2-amine

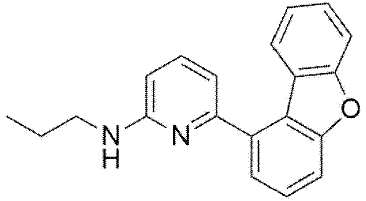

To a two neck bottle, 6-bromo-N-propylpyridin-2-amine (1 g, 4.65 mmol), dibenzo[b,d]furan-1-ylboronic acid (1.18 g, 5.58 mmol), K₂CO₃ (4.23 g) with H₂O (15 mL) (30.6 mmol, 2 M), 1,4-dioxane (40 mL) and MeOH (20 mL) were added and heated at 100°C. Pd(PPh₃)₄ (38 mg, 0.033 mmol) was additionally added thereto, followed by reacting overnight. The reaction product was dried in vacuum and worked-up with EA and water. An organic layer was separated, dried over MgSO₄ and concentrated, and hexane was added thereto to produce a slurry to obtain a white solid product (0.50 g, yield 35.56%).

¹H-NMR (in CDCl₃ 500 MHz): 7.89 (d, 1H), 7.63 - 7.55 (m, 3H), 7.51 - 7.40 (m, 3H), 7.19 (t, 1H), 6.97 (d, 1H), 6.48 (d, 1H), 4.73 (s, 1H), 3.30 (m, 2H), 1.69 (m, 2H), 1.02 (t, 3H).

### (2) Preparation of Transition Metal Compound

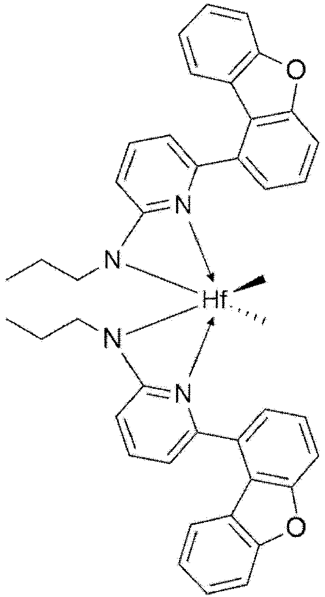

A catalyst was prepared in a glove box. HfCl₄ (0.106 g, 0.331 mmol) was weighed in a vial and dissolved by adding toluene, followed by reducing the temperature to -30°C. Then, MMB (3 M solution in diethyl ether, 0.5 mL) was added thereto dropwisely, followed by reacting at -30°C for 5 minutes. After that, 200 mg (0.661 mmol) of the ligand compound of 6-(dibenzo[b,d]furan-1-yl)-N-propylpyridin-2-amine prepared above was weighed and dissolved by adding 6.6 mL of toluene. The resultant was added to the HfCl₄ & MMB solution dropwisely, followed by reacting for 2 hours.

The reaction solution was dried in vacuum and extracted with hexane to obtain a light yellow solid product (121 mg, yield 45.1%).

¹H-NMR (in CDCl₃ 500 MHz): 7.56 (d, 2H), 7.54 (d, 2H), 7.48 (d, 2H), 7.40 - 7.36 (m, 4H), 7.14 - 7.11 (m, 4H), 7.02 (d, 2H), 6.33 (d, 2H), 5.70 (d, 2H), 2.59 (t, 4H), 1.36 (m, 4H), 0.83 (t, 6H), -0.23 (s, 6H).

### <Polymerization of Ethylene/Alpha-olefin Copolymer>

### Example 1

To a 2 L autoclave reactor, a hexane solvent (900 mL) and 1-octene (600 mL) were added, and the temperature of the reactor was preheated to 150°C. At the same time, the pressure of the reactor was charged with ethylene (35 bar) in advance. 0.5-1 µmol of a catalyst obtained by mixing the compounds of Preparation Example 1 and Reference Example in 1:2, 10 eq of a dimethylanilinium tetrakis(pentafluorophenyl)borate cocatalyst (AB) in contrast to the catalyst, and 1.0 mmol of Tibal as a scavenger were added in order to the reactor by applying an argon pressure of a high pressure, and a copolymerzation reaction was carried out (Top T. (temperature at the top of the reactor): 131.2°C, ΔT. (temperature difference of the reactor before and after the reaction): 10.3°C). Then, a remaining ethylene gas was exhausted, and a polymer solution was added to an excessive amount of ethanol to induce precipitation. The precipitated polymer was washed with ethanol twice or three times, and dried in a vacuum oven of 90°C for 12 hours or more.

### Examples 2 to 5, and Comparative Examples 1 to 3

Ethylene/alpha-olefin copolymers were prepared by the same method as Example 1, except for changing polymerization conditions as in Table 1.

**[Table 1]**

| | Catalyst | Tibal (mmol) | Top T. (°C) | ΔT. | Yield (g) |
|---|---|---|---|---|---|
| Example 1 | Preparation Example 1 | 1.0 | 131.2 | 10.3 | 26.0 |
| Example 2 | Preparation Example 2 | 1.0 | 129.4 | 9.4 | 24.2 |
| Example 3 | Preparation Example 3 | 0.6 | 132.9 | 12.9 | 33.8 |
| Example 4 | Preparation Example 4 | 0.6 | 137.7 | 17.7 | 41.5 |
| Example 5 | Preparation Example 5 | 0.6 | 138.1 | 18.1 | 43.9 |
| Comparative Example 1 | Comparative Preparation Example 1 | 1.0 | 129.5 | 9.5 | 26.3 |
| Comparative Example 2 | Comparative Preparation Example 2 | 0.6 | 132.4 | 12.4 | 28.7 |
| Comparative Example 3 | Comparative Preparation Example 3 | 0.6 | 133.2 | 13.2 | 22.6 |

As shown in Table 1, it can be found that all of Examples 1 to 5 obtained ethylene/alpha-olefin copolymers in high yields.

### <Analysis of Preparation Results of Ethylene/Alpha-olefin Copolymers>

### Experimental Example 1

The physical properties of the copolymers prepared in the Examples and Comparative Examples were comparatively analyzed. Measurement conditions and methods are as follows.

### (1) Catalyst Activity (kgPE/mmol)

The polymer obtained was dried in vacuum, the yield was measured, and a value obtained by dividing a polymer (kg) by a catalyst (mmol) was calculated.

### (2) Density (g/cc)

According to ASTM D-792, a sample was manufactured into a sheet having a thickness of 3 mm and a radius of 2 cm, using a press mold of 180°C, and cooled at a rate of 10°C/min. Measurement was conducted using a Mettler balance.

### (3) Melt Index and Melt Flow Rate Ratio (MFRR, MI10/MI2.16)

According to ASTM D-1238, MI₁₀ (condition E, 190°C, 10 kg load) and MI_{2.16} (condition E, 190°C, 2.16 kg load) were measured, and MI₁₀/MI_{2.16} was calculated.

### (4) Melting Temperature (Tm) and Crystallization Temperature (Tc)

Melting temperature (Tm) and crystallization temperature (Tc) were obtained using a differential scanning calorimeter (DSC 6000) manufactured by PerkinElmer Co. Particularly, with respect to the copolymers, in a nitrogen atmosphere using DSC, the temperature was elevated to 150°C, maintained for 5 minutes, cooled to -100°C, and elevated again, while observing a DSC curve. In this case, the temperature elevation rate and cooling rate were 10°C/min each.

On the DSC curve measured, the melting temperature was set to the maximum point of an endothermic peak during the second temperature elevation, and the crystallization temperature was set to the maximum point of an exothermic peak during the cooling.

**[Table 2]**

| | Catalyst activity (kg/mmol) | Densit y (g/cm³ ) | MI_{2.16} (g/10 min) | MI₁₀ (g/10 min) | MFRR | Tm (°C) | Tc (°C) |
|---|---|---|---|---|---|---|---|
| Example 1 | 8.7 | 0.8771 | 7.14 | 67.1 | 9.40 | 34.4/1 24.5 | 14.1/10 9.3 |
| Example 2 | 8.1 | 0.8765 | 6.68 | 56.0 | 8.38 | 36.6/1 24.8 | 10.1/10 9.0 |
| Example 3 | 11.3 | 0.8655 | 5.04 | 39.16 | 7.77 | 29.8/1 17.9/1 23.3 | 3.5/32. 5/99.0 |
| Example 4 | 13.8 | 0.8622 | 4.77 | 36.68 | 7.69 | 30.4/1 20.7 | 20.8/76 .0 |
| Example 5 | 14.6 | 0.8620 | 5.35 | 41.52 | 7.76 | 31.3/1 15.6 | 16.1/74 .8 |
| Comparative Example 1 | 8.8 | 0.8657 | 7.36 | 59.1 | 8.03 | 29.3/1 15.8 | 6.1/100 .1 |
| Comparative Example 2 | 9.6 | 0.8604 | 3.89 | 28.9 | 7.43 | 28.7/8 8.2 | 16.7/73 .0 |
| Comparative Example 3 | 11.3 | 0.8654 | 2.58 | 19.09 | 7.40 | 36.1/1 16.5 | 9.7/86. 5 |

As the results in Table 2, it can be confirmed that ethylene/alpha-olefin copolymers having excellent heat resistance were prepared considering that Tₘ of the ethylene/alpha-olefin copolymers of Examples 1 to 5 was shown high in contrast to the Comparative Examples. The results are effects shown by using the transition metal compound represented by Formula 1, developed in the present invention, as a catalyst.

## Claims

1. A transition metal compound represented by the following Formula 1: 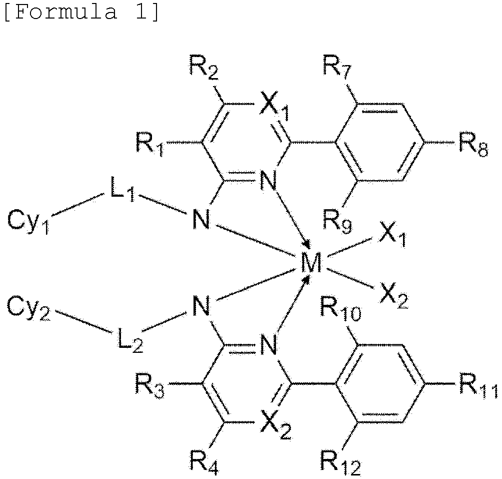 in Formula 1,
M is Ti, Zr or Hf,
X₁ and X₂ are each independently C-R₅, C-R₆ or N, where R₅ and R₆ are each independently hydrogen, an alkyl group of 1 to 20 carbon atoms or a cycloalkyl group of 5 to 20 carbon atoms,
R₁ to R₄ are each independently hydrogen, an alkyl group of 1 to 20 carbon atoms or a cycloalkyl group of 5 to 20 carbon atoms,
R₇ to R₁₂ are each independently an alkyl group of 1 to 20 carbon atoms,
L₁ and L₂ are each independently a single bond or an alkylene group of 1 to 20 carbon atoms,
Cy₁ and Cy₂ are each independently a cycloalkyl group of 5 to 20 carbon atoms, and
X₁ and X₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

2. The transition metal compound according to claim 1, wherein
M is Hf,
X₁ and X₂ are each independently C-H or N,
R₁ to R₄ are each independently hydrogen or an alkyl group of 1 to 10 carbon atoms,
R₇ to R₁₂ are each independently an alkyl group of 1 to 10 carbon atoms,
L₁ and L₂ are each independently an alkylene group of 1 to 6 carbon atoms,
Cy₁ and Cy₂ are each independently a cycloalkyl group of 5 to 10 carbon atoms, and
X₁ and X₂ are each independently an alkyl group of 1 to 10 carbon atoms, an aryl group of 6 to 20 carbon atoms or an arylalkyl group of 7 to 20 carbon atoms.

3. The transition metal compound according to claim 1, wherein the transition metal compound represented by Formula 1 is a compound represented by the following Formula 1A or Formula 1B: 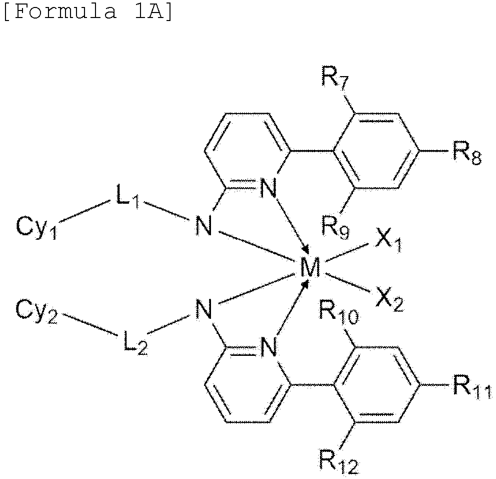 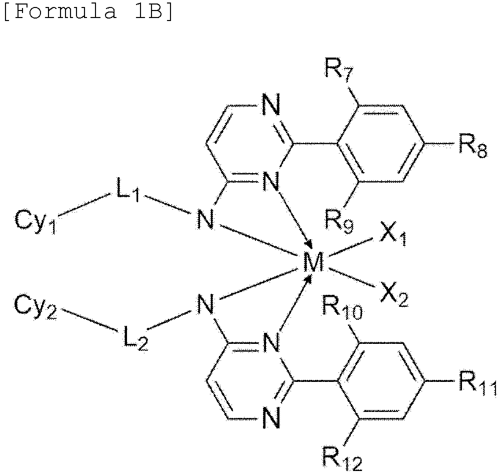 in Formula 1A and Formula 1B,
M is Ti, Zr or Hf,
R₇ to R₁₂ are each independently an alkyl group of 1 to 20 carbon atoms,
L₁ and L₂ are each independently a single bond or an alkylene group of 1 to 20 carbon atoms,
Cy₁ and Cy₂ are each independently a cycloalkyl group of 5 to 20 carbon atoms, and
X₁ and X₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

4. The transition metal compound according to claim 1, wherein the transition metal compound represented by Formula 1 is one selected from the group consisting of the following Formula 1-1 to Formula 1-5:

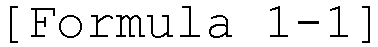

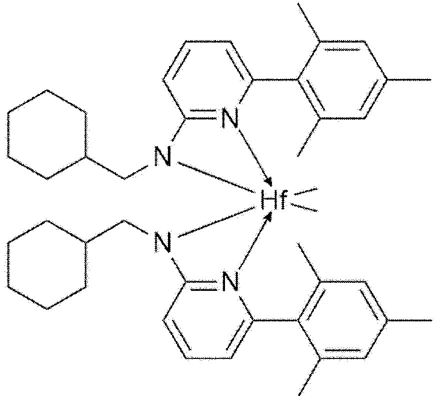

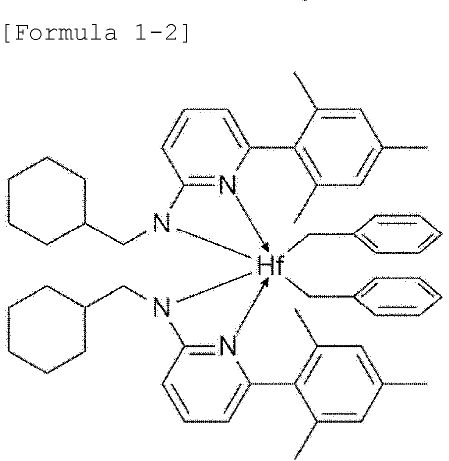

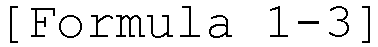

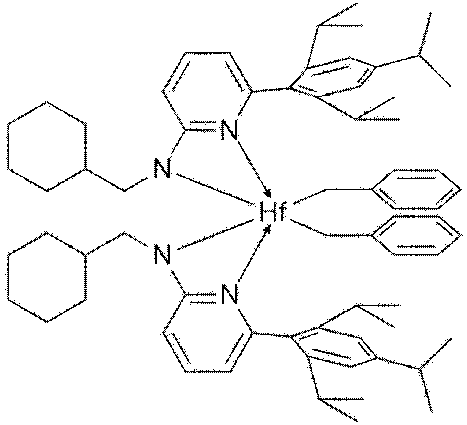

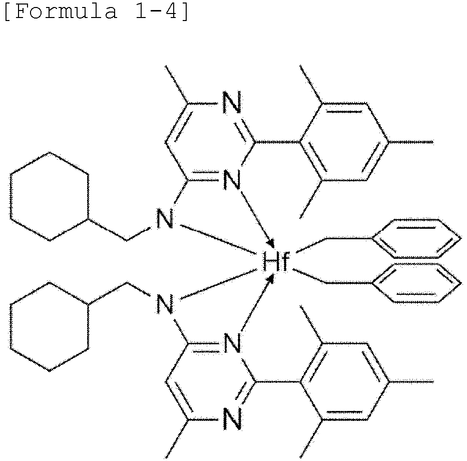

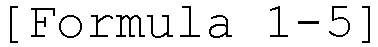

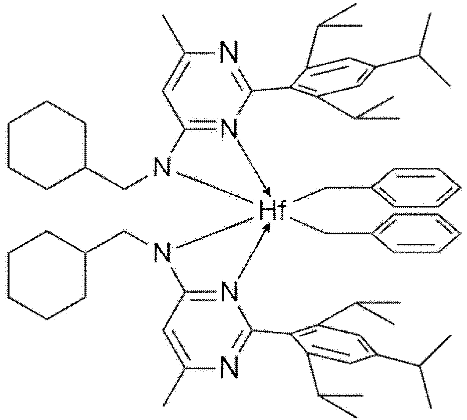

5. A catalyst composition comprising the transition metal compound of claim 1 and a cocatalyst.

6. The catalyst composition according to claim 5, wherein the catalyst composition further comprises a transition metal compound represented by the following Formula 2: 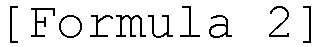 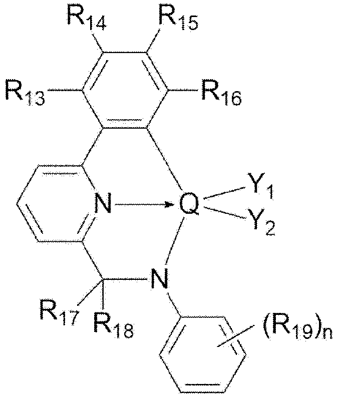 in Formula 2,
Q is Ti, Zr or Hf,
R₁₃ to R₁₆ are each independently hydrogen or an alkyl group of 1 to 20 carbon atoms, where adjacent two or more may be connected with each other to form a ring,
R₁₇ and R₁₈ are each independently hydrogen or a substituted or unsubstituted aryl group of 6 to 20 carbon atoms, where the substitution is substitution with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms,
n is 1 to 5, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

7. The catalyst composition according to claim 6, wherein the transition metal compound represented by Formula 2 is a compound represented by the following Formula 2A: 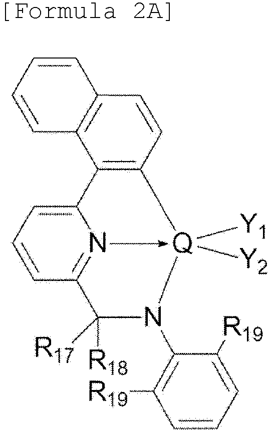 in Formula 2A,
Q is Ti, Zr or Hf,
R₁₇ and R₁₈ are each independently hydrogen or a substituted or unsubstituted aryl group of 6 to 20 carbon atoms, where the substitution is substitution with an alkyl group of 1 to 6 carbon atoms,
each R₁₉ is independently an alkyl group of 3 to 20 carbon atoms, a cycloalkyl group of 4 to 20 carbon atoms or an aryl group of 6 to 20 carbon atoms, and
Y₁ and Y₂ are each independently an alkyl group of 1 to 20 carbon atoms, a cycloalkyl group of 5 to 20 carbon atoms, an aryl group of 6 to 20 carbon atoms, an alkylaryl group of 7 to 20 carbon atoms or an arylalkyl group of 7 to 20 carbon atoms.

8. The catalyst composition according to claim 5, wherein the cocatalyst comprises one or more selected from the group consisting of the following Formula 3 to Formula 5:
[Formula 3] -[Al(Rₐ)-O]ₘ-
[Formula 4] D(Rₐ)₃
[Formula 5] [L-H]⁺[Z(A)₄]⁻ or [L]+[Z(A)₄]⁻
in the above Formulas,
each Rₐ is independently a halogen radical, a hydrocarbyl radical of 1 to 20 carbon atoms, or a halogen-substituted hydrocarbyl radical of 1 to 20 carbon atoms,
m is an integer of 2 or more,
D is aluminum or boron,
L is a neutral or cationic Lewis acid,
Z is an element in group 13,
each A is independently aryl of 6 to 20 carbon atoms, in which one or more hydrogen atoms may be substituted with substituents, or alkyl of 1 to 20 carbon atoms, and
the substituent of A is halogen, hydrocarbyl of 1 to 20 carbon atoms, alkoxy of 1 to 20 carbon atoms, or aryloxy of 6 to 20 carbon atoms.

9. A method for preparing an olefin polymer, the method comprising a step of polymerizing an olefin monomer in the presence of the catalyst composition according to claims 5 to 8.
